Europäisches Patentamt

European Patent Office

Office européen des brevets

(11) Veröffentlichungsnummer: **0 166 352 B1**

(12) **EUROPÄISCHE PATENTSCHRIFT**

(45) Veröffentlichungstag der Patentschrift: **09.09.92**

(21) Anmeldenummer: **85107475.7**

(22) Anmeldetag: **15.06.85**

(51) Int. Cl.⁵: **G01S 3/78**

(54) **Vorrichtung zur Ausrichtung einer richtungssteuerbaren Einrichtung auf eine Lichtquelle.**

(30) Priorität: **20.06.84 DE 3422813**

(43) Veröffentlichungstag der Anmeldung:
**02.01.86 Patentblatt 86/01**

(45) Bekanntmachung des Hinweises auf die
Patenterteilung:
**09.09.92 Patentblatt 92/37**

(84) Benannte Vertragsstaaten:
**CH DE FR GB IT LI**

(56) Entgegenhaltungen:
**FR-A- 1 533 913**
**FR-A- 2 440 526**
**US-A- 2 824 242**

(73) Patentinhaber: **Forschungszentrum Jülich GmbH**
**Postfach 1913**
**W-5170 Jülich(DE)**

(72) Erfinder: **Uhlemann, Reinhard, Dr.**
**Jan-van-Werth-Strasse 80**
**W-5170 Jülich(DE)**
Erfinder: **Oster, Walter**
**Danziger Strasse 15**
**W-4190 Kleve-Kellen(DE)**

EP 0 166 352 B1

**Beschreibung**

Die Erfindung bezieht sich auf eine Vorrichtung zur Ausrichtung einer in zwei Koordinaten richtungssteuerbaren Einrichtung auf eine relativ dazu bewegte Lichtquelle, wobei die Vorrichtung einen in seiner optischen Achse auf die Lichtquelle ausrichtbaren Sensor in fester räumlicher Zuordnung zur Einrichtung aufweist, der ein System ($L_1$, $L_2$) zur Erzeugung eines Bildes der Lichtquelle auf einer rotierenden lichtundurchlässigen Steuerscheibe (S) mit einem lichtdurchlässigen Radialschlitz (1) aufweist, hinter dem ein Radial-Lichtempfänger ($D_1$) für die durch den Radialschlitz gelangende Lichtmenge angeordnet ist,
Sie bezieht sich insbesondere auf die Nachführung von Sonnenkonzentratoren in zwei Koordinaten.

Sonnenkonzentratoren mit hohem Konzentrationsverhältnis (von 300 und mehr) müssen mit hoher Genauigkeit (besser als 0,1°) der Sonne nachgeführt werden, um mit gutem Wirkungsgrad zu arbeiten. Dabei muß die solare Strahlungsenergie möglichst zu jedem Zeitpunkt ohne Verlust vom Konzentrator zum Strahlungsempfänger gelangen. Die Systeme werden deshalb in zwei Achsen der Bewegung der Sonne über den Tag hinweg nachgeführt.

Prinzipiell kann diese Nachführung nach einem festen von der Sonnenbewegung abhängenden Steuerprogramm erfolgen. Da aber ohnehin Mißweisungen auftreten können durch Toleranzen in Lagern und Getrieben, ungenaue Aufstellung, Fehler der Positionsgeber (Potentiometer) bei Winkelsteuerung und durch Windbewegung, wird üblicherweise eine vom unmittelbaren Lichteinfall abhängende Nachführungssteuerung vorgesehen.

Bekannte Steuerungen arbeiten mit einer Mehrzahl von lichtempfindlichen Zellen und Schattensäule für die Feineinstellung. Diese Anordnungen, die bei klarer Witterung ausreichend empfindlich arbeiten, werden in ihrer Funktion durch Hochnebel, Wolkendurchzug und Dunstbildung beeinträchtigt. Ihre Nachführgenauigkeit liegt nur bei ca. 0,2° (12'), was für höher konzentrierende Systeme nicht ausreicht.

Eine Anordnung zur automatischen Richtungssteuerung von Tunnelbohrmaschinen mit Hilfe eines von einem Fixpunkt ausgesandten Laserstrahls ist aus der FR-A-1 533 913 bekannt, bei der zwei mit definiertem Achsabstand auf der Bohrmaschine angeordnete Strahlempfängersysteme zur Erfassung der Winkelabweichungen vorgesehen sind, die abhängig vom ermittelten Verkantungswinkel für eine Selbstzentrierung der Bohrmaschine in die Strahlrichtung sorgen.

Dabei ist vor jedem der beiden Empfänger eine rotierende Blende mit einem offenen Sektor (z.B. 90°-Sektor) mit zugeordneter Photozelle vorgesehen, aus deren abhängig von der Verkantung moduliertem Photostrom zwei Fehlerdetektorspannungen gewonnen werden, die Servomotoren zur Selbstzentrierung steuern, wobei für die Richtungszuordnung zwei versetzte azimutale Randstreifen (180°-Bogen) mit zugeordnetem Photozellenpaar sorgen.

Diese mit zwei Empfängersystemen arbeitende Anordnung ist relativ aufwendig und mit der modulationsabhängigen Erfassung der Verkantung nicht besonders empfindlich.

Ziel der Erfindung ist daher eine Vorrichtung zur Ausrichtung einer richtungssteuerbaren Einrichtung auf eine relativ dazu bewegte Lichtquelle, die mit relativ geringem Aufwand hohe Empfindlichkeiten erreicht. Dabei ist insbesondere die Nachführung von Sonnenkonzentratoren von Interesse, die mit großer Genauigkeit unabhängig von Dunstbildung u.dgl. das sichtbare Strahlungszentrum am Himmel findet und der Ausrichtung zugrundeliegt.

Die zu diesem Zweck entwickelte erfindungsgemäße Vorrichtung der eingangs genannten Art ist dadurch gekennzeichnet, daß der Sensor einen Sensortubus mit dem System ($L_1$, $L_2$) aufweist, daß die Steuerscheibe größer ist als die vom schwankenden Bild der Lichtquelle überstrichene Fläche, daß der lichtdurchlässige Radialschlitz (1) nach außen bis zum Rand dieser Fläche und nach innen bis an die Peripherie des zentrierten Bildes der Lichtquelle reicht und daß der Sensor außerhalb des Radialschlitzes zwei konzentrische lichtdurchlässige halbkreisförmige Azimutalschlitze (2, 3) mit unterschiedlichem Radius und mit je einem zugeordneten ortsfesten Lichtsender ($E_1$, $E_2$) aufweist, desen Licht durch den jeweiligen Azimutalschlitz (2, 3) auf einen gegenüberliegenden ortsfesten Azimutal-Lichtempfänger ($T_1$, $T_2$) fällt, wobei für senkrecht aufeinander stehende Nachführungsachsen der richtungssteuerbaren Einrichtung stets ein Sender/ Empfänger-Paar ($E_1/T_1$) in der Mitte des zugehörigen Azimutalschlitzes (2) steht, wenn sich das zweite Sender/ Empfänger-Paar ($E_2$, $T_2$) am Anfang seines zugehörigen Azimutalschlitzes (3) befindet, wobei der Sensortubus zusammen mit den darin ortsfesten Sender/Empfänger-Paaren ($E_1/T_1$, $E_2$, $T_2$) eine auf der richtungssteuerbaren Einrichtung dreh-justierbare Halterung aufweist, die eine anfängliche Ausrichtung des Radialschlitzes (1) in die Richtung einer der beiden Koordinatenachsen gestattet, wenn eines der Sender/Empfänger-Paare am Anfang des zugehörigen Azimutalschlitzes (2) steht, und wobei die Vorrichtung einen Nachführungsmotor oder Nachführungsmotoren und eine elektrische Schaltung aufweist, um die Drehzahl des Motors oder der Motoren proportional der Größe der durch den Radiallichtempfänger ($D_1$) erkannten Abweichung der Lichtquelle und die Drehrichtung des Motors oder der Motoren entsprechend der durch die Azimutal-lichtempfänger ($T_1$, $T_2$) erkannten Abweichungs-richtung der Lichtquelle zu steuern.

Bei dieser Anordnung wird lediglich ein optisches System angewandt und eine hohe Empfindlichkeit dadurch erreicht, daß ausgehend von völliger Zentrierung mit einem Signal = 0 bei einer Abweichung von der Zentrierung ein Signal proportional zur Auslenkung erfaßt wird. Das zur Auslenkung proportionale Steuersignal für die Lagekorrektur, mit dessen Hilfe der Motor umso schneller läuft, je weiter die Auslenkung ist, hilft Regelschwingungen zu vermeiden.

Als bilderzeugendes System dient erfindungsgemäß insbesondere ein Linsensystem, das im Falle der Nachführung von Sonnenkonzentratoren ein Bild der Sonne auf der Steuerscheibe erzeugt.

Bei dieser Vorrichtung wird durch den Radialschlitz hindurch eine der Auslenkung entsprechende Lichtmenge empfangen, während mit Hilfe der Azimutalschlitze und Sender/Empfänger-Paare die Auslenkungsrichtung erfaßt wird.

Die elektronische Steuerschaltung umfaßt einen Integralregler, der ein - bei Annäherung an die Sollposition kontinuierlich geringer werdendes - Signal erzeugt, das entsprechend der Abweichungsrichtung in ein x- und ein y-Signal aufgeteilt ist. Diese Regelsignale dienen zur Nachführung in zwei Achsen mit Hilfe von zwei regelbaren Gleichstrommotoren oder auch nur eines Nachführungsmotors. Die Regelsignale können auch für den notwendigen Soll-Ist-Wert-Vergleich bei computergesteuerten Konzentratoren verwendet werden.

Die Vorrichtung kann verwendet werden für das Nachführen von

- parabolischen oder sphärischen Konzentratoren (parabolic dish) nach dem Solar-Farm-Prinzip
- Heliostaten oder Heliostatenfeldern für Solar-Tower-Anlagen (erforderliche Genauigkeit 0,02° - 0,05°)
- Versuchsanlagen für solare Hochtemperaturerzeugung mit Konzentrationsverhältnissen über 1000

aber auch für die Verfolgung von Lichtquellen im Bereich von Navigation und Zielverfolgung in der Luft-, Raum- und Seefahrt.

Die Hauptelemente der Vorrichtung werden im nachfolgenden mehr im einzelnen unter Bezugnahme auf die angefügten Zeichnungen erläutert; es zeigen im einzelnen:

Fig. 1      den Sensortubus mit zwei Linsen,

Fig. 2      eine Steuerscheibe für den Sensor,

Fig. 3 u. 7      einen Schaltplan für die Sensorelektronik,

Fig. 4 u. 5      Beispiele für mögliche Positionen der Azimutalschlitze und des Radialschlitzes auf der Steuerscheibe und

Fig. 6      den Aufbau eines Sonnenkonzentrators mit erfindungsgemäßem Sensor.

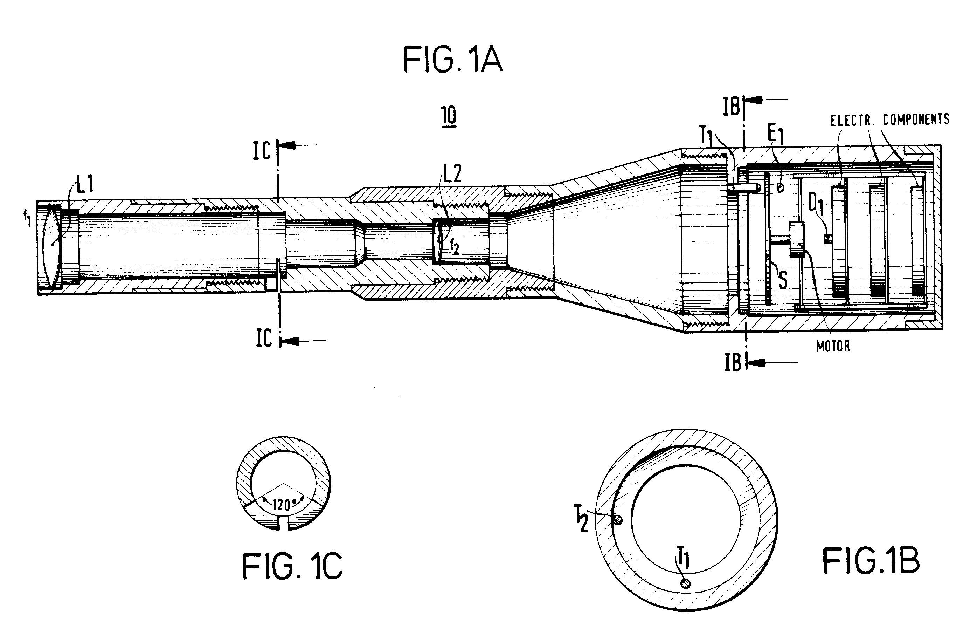

Der in Figur 1 gezeigte Sensortubus enthält zwei Linsen $L_1$ und $L_2$ (bikonvexe achromatische Linsen) mit den Brennweiten $f_1$ = 200 mm und $f_2$ = 16 mm. Damit ergibt sich eine optische Gesamtbrennweite von ca. 2 m bei einer reduzierten Baulänge von ca. 40 cm. Mit einer (nicht gezeigten) Irisblende bei A kann die Sensorempfindlichkeit eingestellt werden.

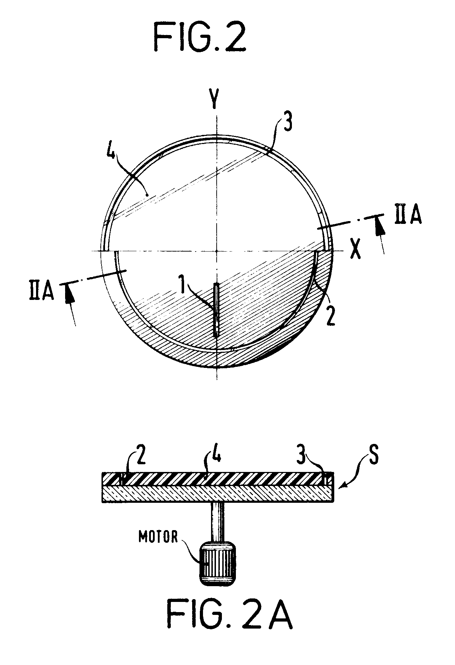

Damit wird ein Sonnenbild von ca. 2 cm ⌀ auf der Steuerscheibe (aus Plexiglas) scharf abgebildet, die einen radialen Schlitz 1 von 20 mm Länge und 2 mm Breite (bestimmt die Ortsauflösung) und zwei azimutale oder halbkreisförmige Schlitze 2, 3 in einem durch Schraffur angedeuteten Lichtundurchlässigen Belag aufweist (s. Figur 2). Der Radialschlitz 1, der 10 mm vom Zentrum der Scheibe entfernt ist, grenzt damit unmittelbar an das genau zentrierte Sonnenbild an.

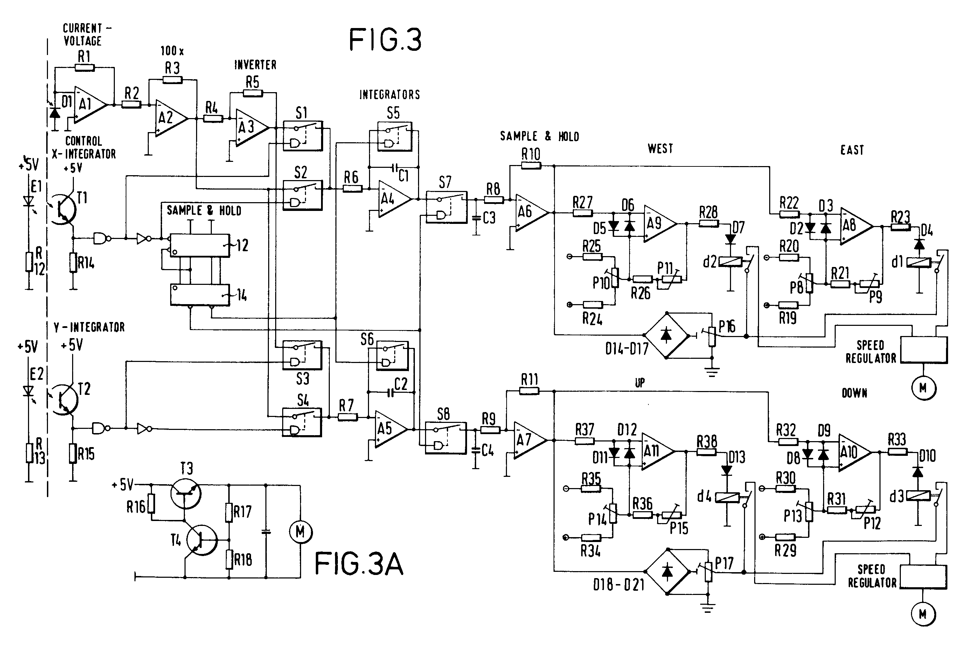

Die Steuerscheibe rotiert mit ca. 100 Hz, wobei während einer Umdrehung das (bei Sollposition dunkle) Umfeld des Sonnenbildes vom radialen Schlitz abgetastet wird. Bei Abweichung des Sonnenbildes (d.h. der optischen Achse des Nachführungssystems) von der Sollposition erfaßt dieser Schlitz ein mehr oder minder großes sichelförmiges Segment des hellen Sonnenbildes, dessen Licht durch eine Streuscheibe (Maratascheibe) auf die ortsfeste Fotozelle $D_1$ (BPW 34 in Fig. 3) fällt, deren Ausgangssignal dem Absolutbetrag der Abweichung entspricht.

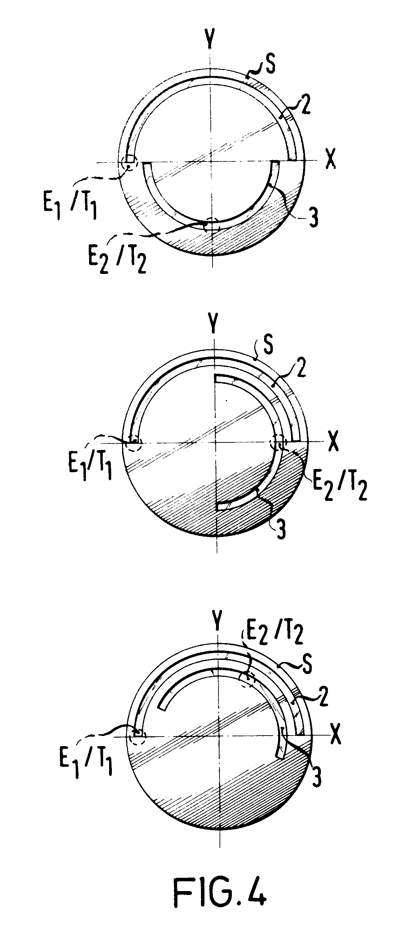

Die azimutalen Schlitze 2 und 3 am Rande der Steuerscheibe ergänzen einander zu 360°. (Weitere Beispiele sind in Fig. 4 angegeben). Zwei zugeordnete Paare von ortsfesten IR-Sendern/-Empfängern ($E_1/T_1$; $E_2/T_2$), die um 90° versetzt angebracht sind, bilden jeweils eine Lichtschranke, über welche die Stellung der Steuerscheibe im Verlaufe einer Vollumdrehung erkannt wird. Der Ausgang dieser Empfänger wird für die richtungsbezogene Steuerung der Nachführungsorgane abhängig von der durch den Radialschlitz erfaßten Auslenkung des Sonnenbildes (von der Sollposition) ausgenutzt.

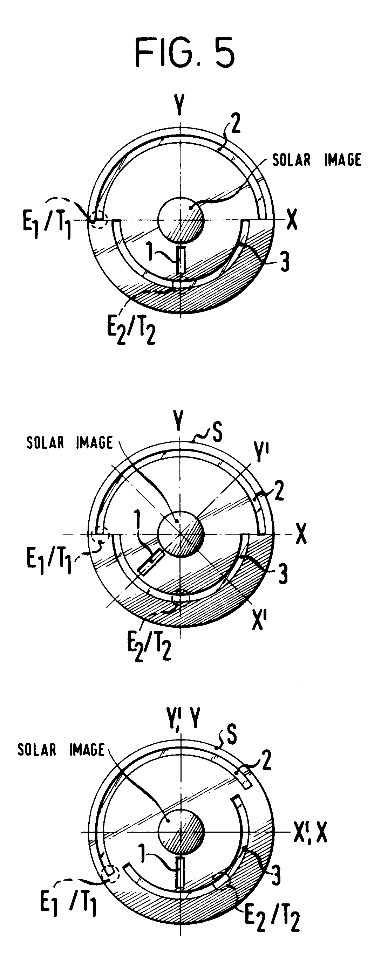

Die Anordnung des Radialschlitzes auf der Steuerscheibe steht in Beziehung zu den Azimutalschlitzen und wurde hier in der Symmetrieachse der Azimutalschlitze vorgesehen. Weitere Beispiele gehen aus Fig. 5 hervor. Eine Veränderung der Anordnung des Radialschlitzes bedeutet bei fester Position der Lichtsender/-empfängerpaare ($E_1/T_1$; $E_2/T_2$) eine Drehung des x-y-Koordinatenkreuzes. Wählt man, wie allgemein üblich, die x-Achse horizontal und die y-Achse vertikal im Raum, so läßt sich z.B. die Position der Lichtsender/-empfängerpaare zu 180° und 270° wählen (Fig. 1, Schnitt B-B). Der Sensortubus ist bei Anbau an den Konzentrator entsprechend (grob) auszurichten (Horizontale-Vertikale).

Die azimutalen Schlitze dienen zusammen mit den IR-Sender/-Empfängerpaaren der Erfassung der Abweichungsrichtung des Sonnenbildes in x- und y-Anteilen, wobei die standortbezogene Ausrichtung der aufeinander senkrechten Koordinaten beliebig wählbar ist, üblicherweise jedoch horizontal und vertikal gewählt wird. Dabei sorgen die IR-Empfänger dafür, daß die der Photozelle nachgeschalteten x- und y-Integratoren gemäß der laufenden Hell-Dunkelschaltung je nach Stellung der Steuerscheibe entweder mit dem positiven oder mit dem invertierten Signal, dessen Absolutbetrag der Auswanderung der Sonne entspricht, beaufschlagt werden.

Ein kleiner Elektromotor M (Graupner, Micro T05, o.a.) sorgt für die Rotation der Steuerscheibe. Die Drehzahl bestimmt die Zeit für einen Zyklus, der sich zu 0,1 sec bei 6000 U/min (100 Hz) ergibt und für die meisten Anwendungen ausreicht. In dieser Zeit legt die Sonne ca. $4 \cdot 10^{-4}$ Grad (0,03') zurück. Der Motor M wird mit einer konstanten Spannung von 1 V betrieben, die mittels einer einfachen Transistorregelung aus der TTL-Versorgungsspannung gewonnen werden kann (s. Fig. 3).

Bei der Abtastung der Umgebung des Sollwertes (Ausgangssignal Null) durch die Steuerscheibe werden alle im Umkreis vom Sollwert vorhandenen Lichtstrahlen (max. $\pm$ 0,75° von der Bildmitte) eines vom Sollwert abweichenden Sonnenbildes von der im Kurzschlußbetrieb arbeitenden Fotozelle $D_1$ empfangen (s. Fig. 3) und das von der Zelle gelieferte Signal durch Operationsverstärker ($A_1$, $A_2$, $A_3$) verarbeitet, und zwar wird im Strom-Spannungswandler $A_1$ der Ausgangsstrom der Fotozelle in eine proportionale Spannung umgewandelt. Die nachfolgende Verstärkerstufe $A_2$ wurde auf 100-fache Verstärkung eingestellt. Das verstärkte Signal wird auf zwei Analogschalter (DG 181) gelegt (S2, S4) und je nach Stellung der Steuerscheibe im Winkelbereich

- 90° bis 90° an den x-Integrator A4
und
0° bis 180° an den y-Integrator A5
weitergegeben.

Die Inverterstufe A3 invertiert das aus der Verstärkerstufe kommende Signal, das ebenfalls über Analogschalter (S1, S3) im Winkelbereich
90° bis 270° an den x-Integrator
und
180° bis 360° an den y-Integrator
weitergegeben wird.

Die von der Stellung der Steuerscheibe (winkelabhängige) Steuerung der Analogschalter sorgt dafür, daß den nachfolgenden Integratoren also einmal das verstärkte und nach einer Drehung der Lochscheibe um 180° das invertierte verstärkte Signal (phasenverschoben) zugeführt wird. Der y-Integrator erhält das um 90° phasenverschobene Signal).

Die Integratoren A4, A5 geben am Ausgang eine Spannung ab, deren Wert der arithmetischen Summe der momentanen, durch die Drehung der Steuerscheibe getakteten Eingangsspannungen über eine bestimmte Zeit entspricht. Während neun der zehn Umdrehungen eines Zyklus werden die Integratoren entsprechend der Stellung der Steuerscheibe und der Auswanderung des Sonnenbildes ge- bzw. entladen.

Der nachfolgende "Sample + Hold" Baustein (A6, A7) übernimmt das Integrationssignal während der neunten Umdrehung der Steuerscheibe, speichert dieses Signal und gibt, während der neue Meßzyklus läuft, dieses Signal an die nachfolgende Komparatorstufe (A8, A9; A10, A11) sowie über die Dioden D14 - 17, D18 - 21 an die handelsübliche Drehzahlregelung (Tachoregelung) für die beiden Gleichstrommotoren (West-Ost, Auf-Ab) ab.

Ein Zähler (SN 7490) und ein Dekoder (SN 7442) in Verbindung mit einem Schmitt-Trigger, der an die x-Steuerung angeschlossen ist, liefert einen Takt, der es gestattet, den Sample & Hold während des 9. Zyklus der Lochscheibe mit $S_7$ und $S_8$ zu laden und den Integrator während des 10. Umlaufes der Lochscheibe mit $S_5$ und $S_6$ zu entladen (System-Reset). Die Meßzeit beträgt damit 0,09 Sekunden, die Zeit eines gesamten Zyklus 0,1 Sekunden.

Das Ausgangssignal des Sample & Hold (A6, 7) gelangt auf die Fensterkomparatoren für die Steuerung des Deklinationsmotors (A10, 11) und des Azimuthmotors (A8, 9). Die Polarität bestimmt über die Relais ($d_1$, $d_2$; $D_3$, $d_4$) die Drehrichtung der Motoren. Die Drehzahl der Motoren bestimmt sich über die absolute Größe des Signals, das über D18-D21 und D14-D17 an eine handelsübliche Tachoregelung angekoppelt werden kann.

Die Fensterkomperatoren schalten bei einem Ausgangssignal von 1 V des Sample + Hold die Motoren ein. Das entspricht einer Auswanderung der Sonne um 0,05° (3') bei ca. 100 W/m$^2$ Einstrahlung (untere Empfindlichkeitsgrenzen des Sensors). Die Motoren werden abgeschaltet, wenn das Ausgangssignal aufgrund der Verfolgung der Sonne wieder auf 0,1 V zurückgegangen ist (Abschaltschwelle der Komparatoren). Bei größerer Einstrahlung ist die Winkelgenauigkeit höher (besser als 0,017°; 1'). Durch andere Einstellung der Schaltelemente lassen sich die Eigenschaften des Sensors in weiten Grenzen den jeweiligen Anforderungen anpassen.

Die gesamte hier beschriebene Anordnung ist in einen Tubus (Fig. 1) wetterfest eingebaut. Die Meßeinrichtung ist mit der nachfolgenden Regelung für die beiden Nachführungsmotoren über ein mehrpoliges Kabel verbunden, das sowohl die Spannungsversorgung ($\pm$ 12V, 5V, OV) als auch den Meßwert ($\pm$ 12 V max.) überträgt.

Der vorstehend beschriebene Sensor hat gegenüber den bekannten Abschattungssystemen, die prinzipiell bei Meßweisung mit Schattenwurf auf eine Fotozelle arbeiten, eine höhere Nachführgenauigkeit (0,01 °) sowie eine größere Empfindlichkeit bei schwacher Solarstrahlung. Die verwendete Optik ist in Verbindung mit der nachgeschalteten Elektronik in der Lage, das Helligkeitszentrum am Himmel zu finden und damit höchste Sicherheit bei der Nachführung zu gewährleisten. Teilabschattung der Sonne bei Wolkendurchzug, die Zirkumsolarstrahlung bei Hochnebel und Dunst oder die geringfügige Änderung der Größe des Sonnenbildes aufgrund der unterschiedlichen Entfernung Erde - Sonne über die Jahreszeiten (Perihel, Aphel) beeinflussen deshalb den Sensor nicht.

Der Sensor wurde mehrere Monate an einer Parabolspiegel-Versuchsanlage (Konzentration >1500) zur Erzeugung solarer Hochtemperaturwärme (T ~ 800 ° - 1500 °C) mit Erfolg eingesetzt. Der Konzentrator ist parallaktisch aufgestellt und wird im Stundenwinkel grob mit einem Synchronmotor (1 U/Tag) nachgeführt. Für die Korrekturbewegungen wird ein über Differentialgetriebe angekoppelter Gleichstrommotor im Azimuth und ein weiterer für die Deklinationsachse verwendet. Der beschriebene Sensor wurde an die handelsübliche Tachoregelung der beiden Motoren angekoppelt. Bei einer solaren Einstrahlung von 900 W/m$^2$ betrug die gemessene Abweichung von der Sollposition ca. 0,01 ° (0,6'), bei 350 W/m$^2$ liegt die Abweichung bei ca. 0,02 ° (1,2'). Diese Abweichungen wurden mit einem parallel zum Sensor ausgerichteten Präzisionsfernrohr mit Strichplatte registriert.

Regelschwingungen des Systems wurden nicht beobachtet. Die gewünschte Winkelgenauigkeit bei der Nachführung läßt sich über weite Grenzen (0,01 ° - 0,1 °) durch Wahl der Ansprech- und Abschaltschwelle der Fensterkomparatoren den Anforderungen anpassen.

Der Sensor ist durch Verwendung üblicher Bauteile weit preiswerter als handelsübliche Zweikoordinanten-Nachführungen, die eine wesentlich geringere Genauigkeit von ca. 0,18 ° bei 1000 W/m$^2$ Einstrahlung aufweisen.

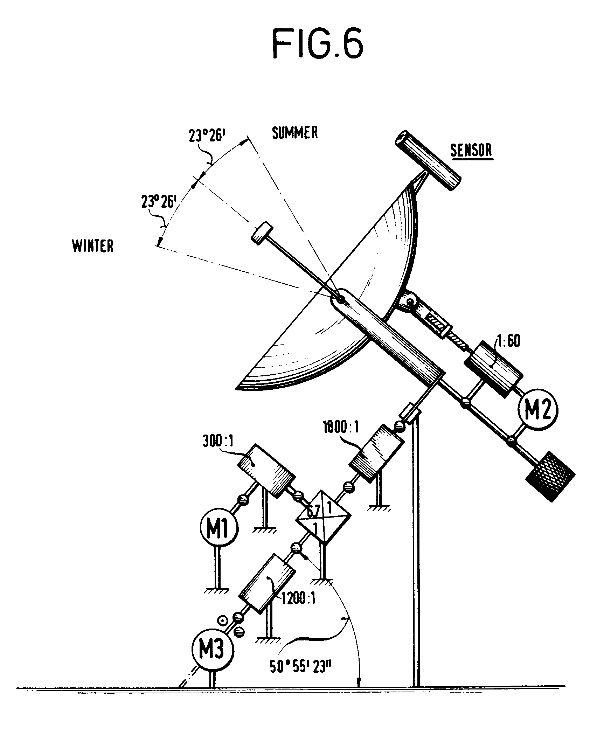

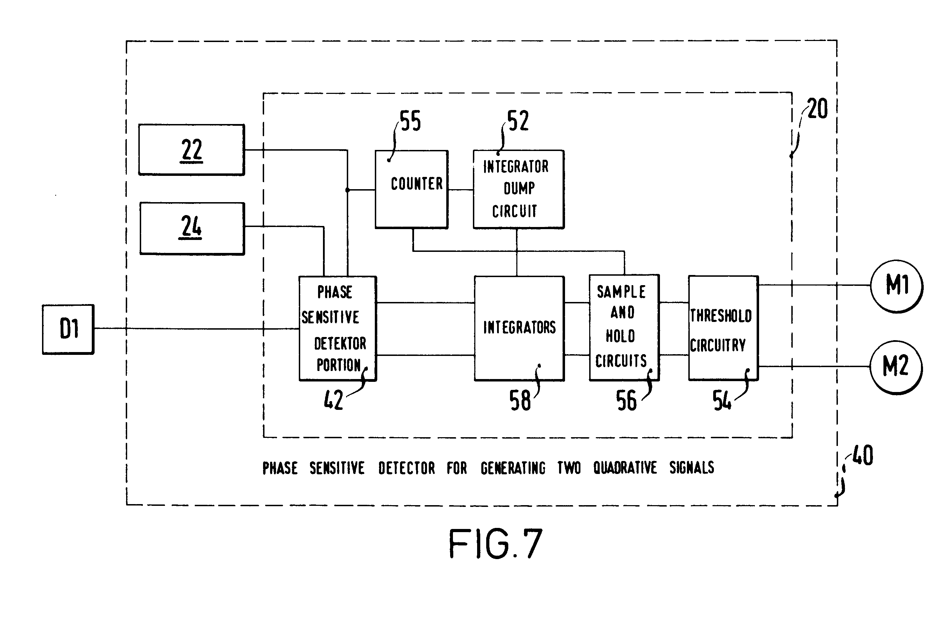

Ein schematischer Aufbau eines Sonnenkonzentrators mit erfindungsgemäßem Sensor ist in Fig. 6 gezeigt: M1 und M2 sind ost/west- bzw. auf/ab-Nachführungsmotoren und M3 ist ein Synchronmotor zum Ausgleich der scheinbaren Tagesbewegung der Sonne (1500/Min). Die gezeigte Stellung entspricht der Südstellung im Frühling oder Herbst. Die an den Sensor anschliessende Steuerschaltung und deren Verbindung zu den Motoren M1 und M2 ist in Zeichnung nicht dargestellt.

Selbstverständlich ist die räumlich feste Zuordnung von Sensor und zu steuernder Vorrichtung dann nicht mehr notwendig, wenn die Auslenkungsinformation einem zentralen Steuerkomputer zugeführt wird. In diesem Falle, muß allerdings der Sensor selbst steuerbare Ausrichtungsmittel zur Nachführung aufweisen. Ein solcher (insbesondere bei erherblichen Abweichungen der Lichtquelle von der optischen Achse unter Verlassen des Akzeptanzbereichs des Sensors nachgeführter) Sensor kann auch selbständig (unabhängig von jeder zu steuernden Vorrichtung) betrieben werden, um z.B. die Relativbewegung einer Lichquelle zu erfassen.

Als Abbildungssystem kann statt der Linsen $L_1$, $L_2$, eine Spiegeloptik oder jedes andere Abbildungssystem verwendet werden.

Der Radialschlitz 1 hat nicht notwendigerweise eine etwa linear-längliche Form, sondern kann z.B. dreieckig sein, insbesondere mit zum Steuerscheibenzentrum weisender Spitze, was für ein nicht lineares Ansprechen der Vorrichtung auf die zu erfassende Auslenkung zweckmäßig ist.

**Patentansprüche**

1. Vorrichtung zur Ausrichtung einer in zwei Koordinaten richtungssteuerbaren Einrichtung auf eine relativ dazu bewegte Lichtquelle, wobei die Vorrichtung einen in seiner optischen Achse auf die Lichtquelle ausrichtbaren Sensor in fester räumlicher Zuordnung zur Einrichtung aufweist, der ein System ($L_1$, $L_2$) zur Erzeugung eines Bildes der Lichtquelle auf einer rotierenden lichtundurchlässigen Steuerscheibe (S) mit einem lichtdurchlässigen Radialschlitz (1) aufweist, hinter dem ein Radial-Lichtempfänger ($D_1$) für die durch den Radialschlitz gelangende Lichtmenge angeordnet ist, **dadurch gekennzeichnet,** daß der Sensor einen Sensortubus mit dem System ($L_1$, $L_2$) aufweist, daß die Steuerscheibe größer ist als die vom schwankenden Bild der Lichtquelle überstrichene Fläche, daß der lichtdurchlässige Radialschlitz (1) nach außen bis zum Rand dieser Fläche und nach innen bis an die Peripherie des zentrierten Bildes der Lichtquelle reicht und daß der Sensor außerhalb des Radialschlitzes zwei konzentrische lichtdurchlässige halbkreisförmige Azimutalschlitze (2, 3) mit unterschiedlichem Radius und mit je einem zugeordneten ortsfesten Lichtsender ($E_1$, $E_2$) aufweist, dessen Licht durch den jeweiligen Azimutalschlitz (2, 3) auf einen gegenüberliegenden ortsfesten Azimutal-Lichtempfänger ($T_1$, $T_2$) fällt, wobei für senk-

recht aufeinander stehende Nachführungsachsen der richtungssteuerbaren Einrichtung stets ein Sender/ Empfänger-Paar ($E_1/T_1$) in der Mitte des zugehörigen Azimutalschlitzes (2) steht, wenn sich das zweite Sender/ Empfänger-Paar ($E_2$, $T_2$) am Anfang seines zugehörigen Azimutalschlitzes (3) befindet, wobei der Sensortubus zusammen mit den darin ortsfesten Sender/Empfänger-Paaren ($E_1/T_1$, $E_2$, $T_2$) eine auf der richtungssteuerbaren Einrichtung drehjustierbare Halterung aufweist, die eine anfängliche Ausrichtung des Radialschlitzes (1) in die Richtung einer der beiden Koordinatenachsen gestattet, wenn eines der Sender/Empfänger-Paare am Anfang des zugehörigen Azimutalschlitzes (2) steht, und wobei die Vorrichtung einen Nachführungsmotor oder Nachführungsmotoren und eine elektrische Schaltung aufweist, um die Drehzahl des Motors oder der Motoren proportional der Größe der durch den Radiallichtempfänger ($D_1$) erkannten Abweichung der Lichtquelle und die Drehrichtung des Motors oder der Motoren entsprechend der durch die Azimutallichtempfänger ($T_1$, $T_2$) erkannten Abweichungsrichtung der Lichtquelle zu steuern.

2. Vorrichtung nach Anspruch 1,
   **dadurch gekennzeichnet,**
   daß der Radialschlitz (1) in der Symmetrieachse zumindest eines der Azimutalschlitze (2, 3) oder um ein ganzes Vielfaches von 90° versetzt dazu angeordnet ist.

3. Vorrichtung nach Anspruch 2,
   **dadurch gekennzeichnet,**
   daß die Azimutalschlitze (2, 3) nach außen zu zum Radialschlitz benachbart sind und sich zu einem Vollkreis ergänzen und daß der Radialschlitz (1) in der gemeinsamen Symmetrieachse der Azimutalschlitze liegt.

4. Vorrichtung nach einem der vorangehenden Ansprüche,
   **dadurch gekennzeichnet,**
   daß der Durchmesser der Steuerscheibe (S) dem um die Azimutalschlitzbreiten vergrößerten Dreifachen des Sonnenbilddurchmessers entspricht und der an die Peripherie des zentrierten Sonnenbildes angrenzende Radialschlitz (1) eine Länge von einem Sonnenbilddurchmesser hat.

5. Vorrichtung nach einem der vorangehenden Ansprüche,
   **dadurch gekennzeichnet,**
   daß der Radialempfänger ($D_1$) hinter einer Steuenscheibe (M) ortsfest angeordnet ist.

6. Vorrichtung nach einem der vorangehenden Ansprüche, dadurch gekennzeichnet, daß die elektrische Schaltung zumindest je einen Integrator für die x- bzw. y-Koordinateachse umfaßt zur anteilsmäßigen Aufsummierung des vom Emfänger ($D_1$) hinter dem Radialschlitz (1) gelieferten Signals abhängig von den Signalen der Sender/Empfänger-Paare ($E_1/T_1$,$E_2/T_2$) über eine wählbare Anzahl von Steuerscheibenumdrehungen, wobei das Signal der x- bzw. y-Integration dann die Drehzahl und -richtung des zugehörigen Motors bestimmt.

7. Vorrichtung zur Erfassung der Relativbewegung einer Lichtquelle, gekennzeichnet durch die Merkmale des Anspruchs 1, wobei die elektrische Schaltung statt zum Motorantrieb der Nachführungsmotoren zur Bahnaufzeichnung der Lichtquelle benutzt wird.

8. Vorrichtung nach Anspruch 6 oder 7,dadurch gekennzeichnet, daß die elektrische schaltung einen Analogteil, der die elektrischen Signale des Radial-Empfängers ($D_1$) verstärkt und invertiert und einen Digitalteil umfaßt, der die nachfolgenden Integratoren für die beiden Richtungen der Zweikoordinatensteuerung gemäß der Stellung der rotierenden Steuerscheibe (S) anteilsmäßig richtig mit den positiven oder invertierten Signalen für eine bestimmte wählbare Anzahl von Steuerscheibenumdrehungen beaufschlagt, während einer weiteren Umdrehungs das aufintegrierte Signal an zwei nachfolgende Sample und Hold-Bausteine, einer je Richtung, abgibt und während der nächsten Umdrehung die Integratoren wieder initialisiert oder kurzschließt zur Aufnahme des folgenden Signalzyklusses, währenddessen die Sample und Hold-Bausteine das Steuersignal
   - an eine nachfolgende Komparatorschaltung, die die Ansprechschwelle der Nachführungsmotoren und ihre Drehrichtung festlegt, sowie an deren elektronische Drehzahlregelung weitergeben,
   - oder an einen Computer zur Bahnerfassung der Lichtquelle.

**Claims**

1. A means of aligning a device, which is directionally controllable with respect to two coordinates, with a light source which is moved in relation to it, wherein the means has a sensor, the optical axis of which can be aligned with the light source, in a fixed spatial relationship with the device, which device has a system ($L_1$, $L_2$) for producing an image of the light source on a rotating opaque control disc (S) with a transparent radial slit (1), behind which is disposed a radial light receiver ($D_1$) for the amount of light passing through the radial slit, characterised in that the sensor has a sensor tube body with the system ($L_1$, $L_2$), that the control disc is larger than the area covered by the variable image of the light source, that the transparent radial slit (1) extends outwards as far as the edge of this area and extends inwards as far as the periphery of the centred image of the light source, and that outside the radial slit the sensor has two concentric transparent semicircular azimuthal slits (2, 3) with different radii, each with an associated fixed light transmitter ($E_1$, $E_2$), the light from which falls on an opposite fixed azimuthal light receiver ($T_1$, $T_2$) via the respective azimuthal slit (2, 3), wherein, for tracking axes of the directionally controllable device which are at right angles to each other, one transmitter/receiver pair ($E_1/T_1$) is always in the centre of the associated azimuthal slit (2) when the second transmitter/receiver pair ($E_2$, $T_2$) is located at the start of its associated azimuthal slit (3), wherein the sensor tube body, together with the transmitter/receiver pairs ($E_1/T_1$, $E_2$, $T_2$) fixed within it, has a rotationally adjustable mounting on the directionally controllable device, which mounting permits an initial alignment of the radial slit (1) in the direction of one of the two coordinate axes when one of the transmitter/receiver pairs is at the start of the associated azimuthal slits (2), and wherein the means has a tracking motor or tracking motors, and an electrical circuit to control the rotational speed of the motor or motors in proportion to the magnitude of the deviation of the light source perceived by the radial light receiver ($D_1$), and to control the direction of rotation of the motor or motors corresponding to the direction of deviation of the light source perceived by the azimuthal light receivers ($T_1$, $T_2$).

2. A means according to Claim 1, characterised in that the radial slit (1) is disposed on the axis of symmetry of at least one of the azimuthal slits (2, 3) or is displaced by a whole multiple of 90° with respect to it.

3. A means according to Claim 2, characterised in that the azimuthal slits (2, 3) are externally adjacent to the radial slit and complement one another to form a complete circle, and that the radial slit (1) lies on the common axis of symmetry of the azimuthal slits.

4. A means according to any one of the preceding Claims, characterised in that the diameter of the control disc (S) corresponds to three times the diameter of the solar image enlarged by the widths of the azimuthal slits, and the radial slit (1) adjoining the periphery of the centred solar image has a length of one solar image diameter.

5. A means according to one of the preceding Claims, characterized in that the radial receiver ($D_1$) is disposed fixed behind a disc (Marata disc).

6. A means according to one of the preceding Claims, characterized in that the electrical circuit comprises at least one integrator for each of the x and y coordinate axes, for the proportional summation of the signal supplied by the receiver ($D_1$) behind the radial slit (1) depending on the signals from the transmitter/receiver pairs ($E_1/T_1$, $E_2/T_2$) over a selectable number of control disc rotations, wherein the x or y integration signal then determines the rotational speed and the direction of rotation of the associated motor.

7. A means of detecting the relative motion of a light source, characterised by the features of Claim 1, wherein the electrical circuit is used for recording the path of the light source instead of driving tracking motors.

8. A means according to Claim 6 or 7, characterised in that the electrical circuit comprises an analogue portion, which amplifies and inverts the electrical signals from the radial receiver ($D_1$), and a digital portion, which activates the subsequent integrators for the two directions of the two coordinate control system according to the position of the rotating control disc (S) correctly in proportion to the positive or inverted signals for a definite, selectable number of rotations of the control disc, sends the integrated signal to two subsequent sample and hold components (one for each direction) during a further rotation, and re-initialises or short-circuits the integrators during the next rotation to accept the following signal cycle, and in the meantime the sample and hold components send the control signal
- to a subsequent comparator circuit which determines the response threshold of the tracking motors and their direction of rotation, and to the electronic speed control system of the motors;
- or to a computer for recording the path of the light source.

**Revendications**

1. Dispositif pour aligner un appareil, pouvant être directionnellement commandé dans deux coordonnées, sur une source lumineuse relativement déplacée, le dispositif présentant un capteur dont l'axe optique peut être aligné sur la source lumineuse, ce capteur se trouvant en association spatiale fixe avec l'appareil et présentant un système ($L_1$, $L_2$) pour produire une image de la source lumineuse sur un disque de commande rotatif opaque (S) présentant une fente radiale translucide (1), derrière laquelle est disposé un récepteur lumineux radial ($D_1$) pour la quantité de lumière passant par la fente radiale, **caractérisé** en ce que le capteur présente un tube de capteur muni du système ($L_1$, $L_2$), en ce que le disque de commande est plus grand que la surface balayée par l'image fluctuante de la source lumineuse, en ce que la fente radiale translucide (1) s'étend vers l'extérieur jusqu'au bord de cette surface et vers l'intérieur jusqu'à la périphérie de l'image centrée de la source lumineuse, et en ce que le capteur présente, en dehors de la fente radiale, deux fentes azimutales (2, 3), semi-circulaires, translucides et concentriques, de rayons différents et dotées chacune d'un émetteur lumineux stationnaire associé ($E_1$, $E_2$), dont la lumière tombe, par la fente azimutale respective (2, 3), sur une récepteur lumineux azimutal stationnaire en vis-à-vis ($T_1$, $T_2$), une paire émetteur/récepteur ($E_1/T_1$) se trouvant toujours, pour des axes de poursuite verticalement superposés de l'appareil pouvant être directionnellement commandé, au milieu de la fente azimutale associée (2) lorsque la seconde paire émetteur/récepteur ($E_2/T_2$) se trouve au début de sa fente azimutale associée (3), le tube de capteur présentant, conjointement avec les paires émetteurs/récepteurs ($E_1/T_1$, $E_2/T_2$) qui sont stationnaires dans ce tube, un support qui peut être ajusté par rotation sur l'appareil pouvant être directionnellement commandé et qui autorise un alignement initial de la fente radiale (1) dans la direction d'un des deux axes de coordonnées lorsqu'une des paires émetteur/récepteur se trouve au début de la fente azimutale associée (2), et le dispositif présentant un ou des moteurs de poursuite et un montage électrique, afin de commander le régime du ou des moteurs proportionnellement à la valeur de la déviation de la source lumineuse reconnue par le récepteur lumineux radial ($D_1$), et la direction de rotation du ou des moteurs conformément à la direction de déviation de la source lumineuse reconnue par les récepteurs lumineux azimutaux ($T_1$, $T_2$).

2. Dispositif selon la revendication 1, **caractérisé** en ce que la fente radiale (1) est disposée dans l'axe de symétrie d'au moins une des fentes azimutales (2, 3), ou en est décalée d'un multiple entier de 90°.

3. Dispositif selon la revendication 2, **caractérisé** en ce que les fentes azimutales (2, 3) sont voisines de la fente radiale vers l'extérieur et se complètent pour former un cercle complet, et en ce que la fente radiale (1) se trouve dans l'axe de symétrie commun des fentes azimutales.

4. Dispositif selon l'une des revendications précédentes, **caractérisé** en ce que le diamètre du disque de commande (S) correspond au triple, augmenté des largeurs des fentes azimutales, du diamètre de l'image solaire, et la fente radiale (1), limitrophe de la périphérie de l'image solaire centrée, possède une longueur égale à un diamètre d'image solaire.

5. Dispositif selon l'une des revendications précédentes, **caractérisé** en ce que le récepteur radial ($D_1$) est disposé stationnairement derrière un disque de Marata.

6. Dispositif selon l'une des revendications précédentes, **caractérisé** en ce que le montage électrique comprend au moins un intégrateur respectif pour l'axe de coordonnées x ou y, afin de totaliser proportionnellement le signal délivré par le récepteur ($D_1$) derrière la fente radiale (1) en fonction des signaux des paires émetteur/récepteur ($E_1/T_1$, $E_2/T_2$) sur un nombre sélectionnable de révolutions du disque de commande, le signal de l'intégration en x ou en y déterminant alors le régime et la direction de rotation du moteur associé.

7. Dispositif pour enregistrer le déplacement relatif d'une source lumineuse, **caractérisé** par les caractéristiques de la revendication 1, le montage électrique étant utilisé, non pas pour entraîner les moteurs de poursuite, mais pour enregistrer la trajectoire de la source lumineuse.

8. Dispositif selon la revendication 6 ou 7, **caractérisé** en ce que le montage électrique comprend une partie analogique qui amplifie et inverse les signaux électriques du récepteur radial ($D_1$), et une partie numérique qui alimente proportionnellement et correctement, selon la position du disque de commande rotatif (S), les intégrateurs consécutifs pour les deux directions de la commande en deux coordonnées en signaux positifs ou inversés pour un nombre sélectionnable déterminé de révolutions du disque de commande, tandis qu'une révolution supplémentaire délivre le signal intégré sur deux modules consécutifs d'échantillonnage et de maintien, un par direction, et tandis que la révolution suivante réinitialise ou court-circuite les intégrateurs afin de recevoir le cycle suivant de signaux, pendant que les modules d'échantillonnage et de maintien transmettent le signal de commande

- à un montage comparateur consécutif, qui fixe le seuil de réaction des moteurs de poursuite et leur direction de rotation, ainsi qu'à leur système électronique de régulation de régime,
- ou à un ordinateur pour enregistrer la trajectoire de la source lumineuse.

FIG. 1A

10

FIG.1B

FIG. 1C

ELECTR. COMPONENTS

MOTOR

# FIG.2

# FIG. 2A

FIG.3

FIG.3A

EP 0 166 352 B1

FIG.4

# FIG. 5

# FIG.6

FIG.7

PHASE SENSITIVE DETECTOR FOR GENERATING TWO QUADRATIVE SIGNALS